# FASCICULE DE BREVET EUROPEEN

(11) **EP 2 670 884 B1**
(45) Date de publication et mention de la délivrance du brevet: **23.11.2016**
(21) Numéro de dépôt: 12706652.0
(22) Date de dépôt: 30.01.2012
(51) Int. Cl.: C23C 18/06, C23C 18/08, C23C 18/16, C23C 18/31, B22F 9/24, C23C 18/18, B22F 7/04, G01N 21/552, G01N 21/65, B82Y 30/00, B82Y 40/00

(54) **PROCEDE DE FABRICATION DE NANOPARTICULES METALLIQUES**
VERFAHREN ZUR HERSTELLUNG VON METALLNANOPARTIKELN
METHOD FOR MANUFACTURING METAL NANOPARTICLES

(30) Priorité: 01.02.2011 FR 1150773
(43) Date de publication de la demande: 11.12.2013
(73) Titulaire: Université de Technologie de Troyes, 10010 Troyes Cedex (FR)
(72) Inventeur: JRADI, Safi, F-10800 Moussey (FR); JRADI, Suzanna, F-10800 Moussey (FR); PLAIN, Jérôme, F-1000 Troyes (FR); ROYER, Pascal, 10000 Troyes (FR)
(74) Mandataire: Thomas, Nadine
(86) Numéro de dépôt international: PCT/FR2012/050194
(87) Numéro de publication internationale: WO 2012/104534

(56) Documents cités:
- US-A1- 2009 047 512
- RAFAEL ABARGUES ET AL: "Optical properties of different polymer thin films containing in situ synthesized Ag and Au nanoparticles", NEW JOURNAL OF CHEMISTRY, vol. 33, no. 8, 1 janvier 2009 (2009-01-01), page 1720, XP55022543, ISSN: 1144-0546, DOI: 10.1039/b900185a
- JONG HAK KIM ET AL: "Effect of the polymer matrix on the formation of silver nanoparticles in polymer-silver salt complex membranes", JOURNAL OF POLYMER SCIENCE PART B: POLYMER PHYSICS, vol. 44, no. 8, 15 avril 2006 (2006-04-15) , pages 1168-1178, XP055005166, ISSN: 0887-6266, DOI: 10.1002/polb.20777
- SINGH ET AL: "In situ synthesis of silver nano-particles in polymethylmethacrylate", MATERIALS CHEMISTRY AND PHYSICS, ELSEVIER SA, SWITZERLAND, TAIWAN, REPUBLIC OF CHINA, vol. 104, no. 2-3, 19 juillet 2007 (2007-07-19), pages 367-372, XP022157250, ISSN: 0254-0584, DOI: 10.1016/J.MATCHEMPHYS.2007.03.026
- SMIRNOVA L A ET AL: "UV-induced formation of gold nanoparticles in a poly(methyl methacrylate) matrix", DOKLADY PHYSICAL CHEMISTRY, KLUWER ACADEMIC PUBLISHERS-PLENUM PUBLISHERS, NE, vol. 400, no. 5-6, 1 février 2005 (2005-02-01), pages 19-21, XP019296210, ISSN: 1608-3121
- FENG XUE ET AL: "Characterization of Acetone-Solution Casting Film of PMMA", FRONTIERS OF CHEMISTRY IN CHINA ; SELECTED PUBLICATIONS FROM CHINESE UNIVERSITIES, HIGHER EDUCATION PRESS, BE, vol. 1, no. 1, 1 janvier 2006 (2006-01-01) , pages 45-47, XP019203263, ISSN: 1673-3614, DOI: 10.1007/S11458-006-0010-4
- RACHID GRADESS ET AL: "Localized surface plasmon resonance sensor based on Ag-PVA nanocomposite thin films", JOURNAL OF MATERIALS CHEMISTRY, vol. 19, no. 48, 1 janvier 2009 (2009-01-01), page 9233, XP55022546, ISSN: 0959-9428, DOI: 10.1039/b910020b
- XIAOYU ZHANG ET AL: "Electrochemical Tuning of Silver Nanoparticles Fabricated by Nanosphere Lithography", NANO LETTERS, vol. 5, no. 7, 1 juillet 2005 (2005-07-01) , pages 1503-1507, XP55022560, ISSN: 1530-6984, DOI: 10.1021/nl050873x
- HOA ET AL: "Towards integrated and sensitive surface plasmon resonance biosensors: A review of recent progress", BIOSENSORS AND BIOELECTRONICS, ELSEVIER BV, NL, vol. 23, no. 2, 16 septembre 2007 (2007-09-16), pages 151-160, XP022250730, ISSN: 0956-5663, DOI: 10.1016/J.BIOS.2007.07.001
- VINCENZO GIANNINI ET AL: "Surface Plasmon Resonances of Metallic Nanostars/Nanoflowers for Surface-Enhanced Raman Scattering", PLASMONICS, vol. 5, no. 1, 1 mars 2010 (2010-03-01), pages 99-104, XP55022605, ISSN: 1557-1955, DOI: 10.1007/s11468-009-9121-3
- NICOLAS DROGAT ET AL: "One-Pot Silver Nanoring Synthesis", NANOSCALE RESEARCH LETTERS, vol. 5, no. 3, 1 mars 2010 (2010-03-01), pages 566-569, XP55022606, ISSN: 1931-7573, DOI: 10.1007/s11671-009-9505-5
- WENXIN NIU ET AL: "Selective Synthesis of Single-Crystalline Rhombic Dodecahedral, Octahedral, and Cubic Gold Nanocrystals", JOURNAL OF THE AMERICAN CHEMICAL SOCIETY, vol. 131, no. 2, 21 janvier 2009 (2009-01-21), pages 697-703, XP55022607, ISSN: 0002-7863, DOI: 10.1021/ja804115r

## Description

### DOMAINE TECHNIQUE DE L'INVENTION

L'invention se rapporte au domaine de nanoparticules métalliques et leurs propriétés physico-chimiques, thermiques, optiques, catalytiques. Plus particulièrement l'invention se rapporte à un procédé de fabrication de nano-objets métalliques sur un substrat et les nanostructures métalliques ainsi obtenues ainsi que leurs utilisations en tant que capteurs bio/chimiques.

### ETAT DE LA TECHNIQUE ANTERIEURE

Les nanoparticules notamment métalliques font l'objet d'un intérêt particulier dans divers domaines de sciences et de technologies, pour un certain nombre d'applications, par exemples, pour la photothérapie ou pour l'élaboration des capteurs bio/chimiques.

Les nanoparticules métalliques comme l'argent et l'or font l'objet d'un intérêt croissant dans divers domaines. Ceci est dû à leurs propriétés optiques originales dues à la présence d'une bande de plasmon. Ce phénomène est lié à la présence d'oscillation collective des électrons de la bande de conduction qui est un phénomène résonant caractérisé par une absorption plus importante (située dans le visible pour l'argent et l'or). Contrôler la taille, la morphologie et l'environnement chimique des nanoparticules, permet de modifier par exemple, de façon contrôlée, la résonance plasmon et donc les propriétés macroscopiques d'un tel matériau les contenant. Les nanoparticules métalliques présentent des applications dans des domaines aussi divers que l'analyse biologique, la photovoltaïque, l'électronique du futur ou bien la catalyse, ou encore la cosmétique (crèmes solaires).

De plus, pour de telles applications, une synthèse des nanoparticules permettant un bon contrôle de la taille, la forme et la composition est un enjeu important. Plus particulièrement, les métaux nobles, vu leurs propriétés originales liées à la résonance plasmon déjà évoquée, leurs caractéristiques changent en fonction de la taille et de la forme des nanoparticules. C'est ainsi que leur compréhension, d'un point de vue fondamental, fait l'objet d'un grand nombre de travaux dans des laboratoires répartis dans le monde entier.

La demande internationale WO 2006/133288 décrit un procédé de fabrication d'un film mince de nanoparticules métalliques. Ce procédé se produit en plusieurs étapes : il faut d'abord mélanger une solution polymère avec un sel métallique afin de créer une solution d'un précurseur métallique, ensuite former un film de précurseur métallique par suppression du solvant, puis chauffer pour réduire le sel et enfin chauffer une deuxième fois pour éliminer le polymère. Ce procédé se déroule en plusieurs étapes et il est nécessaire de chauffer une première fois pour réduire le sel métallique puis de chauffer une deuxième fois pour éliminer le polymère.

La demande internationale WO 2006/072959 décrit un procédé permettant de préparer une dispersion aqueuse de nanoparticules de métal. Le procédé comprend la fourniture d'une suspension aqueuse d'un sel métallique, la réduction préliminaire de la suspension de sel métallique au moyen d'un polymère hydrosoluble capable de réduire les métaux, afin de former des noyaux métalliques et enfin l'ajout d'un réducteur chimique pour former des nanoparticules de métal en dispersion. Ce procédé préconise l'utilisation du polymère hydrosoluble pour réduire le sel métallique et enfin l'ajout d'un réducteur chimique pour former des nanoparticules métalliques.

La demande internationale WO 2004/011178 divulgue un procédé de fabrication de nanoparticules métalliques comprenant une étape de préparation d'une composition précurseur comprenant un composé métallique et un composé organique, la composition précurseur est un liquide ou solide à température ambiante. Le procédé comprend une étape de chauffage de la composition de précurseur dans des conditions efficaces pour produire des nanoparticules métalliques. Ce procédé se réalise en plusieurs étapes parce qu'il est nécessaire de chauffer pour réduire le sel métallique, de plus, le composé utilisé pour réduire le sel métallique est organique. Il peut être un polymère hydrosoluble ou un mélange de produits organiques.

On connait aussi l'article de Rafael Abargues intitulé « optical properties of différent polymer thin films containing in situ sunthesized Ag and Au nanoparticles », new journal of chemistry, vol33, no8, 1 janvier 2009, page 1720, XP055022543, ISSN : 1144-0546, DOI : 10.1039/b900185a. L'objet de la revendication 1 diffère de l'enseignement de ce document en ce que le substrat est conducteur ou semi-conducteur et en ce que la transformation de la solution précurseur métallique/polymère en un film poreux est réalisée par l'élimination du solvant et simultanément par réduction du sel de métal, par dépôt et étalement de la solution précurseur métallique/polymère sur la surface du substrat.

Les effets techniques des différences citées, consistent en ce que les nano-objets métalliques sont créés en temps réel au cours du dépôt et de l'étalement d'une solution de précurseur métallique sur une surface d'un substrat conducteur ou semi- conducteur. Lesdits nano-objets métalliques sont donc naturellement dispersés et fixés sur la surface du substrat et ils forment ainsi des nanostructures métalliques exemptes de stabilisants et de réducteurs ou de tout autre ligand.

Le problème que la présente invention se propose de résoudre concerne la fabrication simple, à faible coût et en temps réel de nano-objets métalliques sur la surface d'un substrat conducteur ou semi-conducteur. Or, aucun des documents de l'état de la technique ne propose une solution simple pour la fabrication de nano-objets métalliques.

En effet, le document US 2009/047512 A1, décrit un procédé de fabrication d'un film mince de nanoparticules métalliques d'or en utilisant un sel d'or et un polymère "hydrosoluble". Le procédé est réalisé en plusieurs étapes : il faut d'abord former une solution de précurseur métallique dans un film par l'élimination d'un solvant, puis chauffer pour réduire le sel et enfin chauffer une deuxième fois pour éliminer le polymère, et former une monocouche de nanoparticules métalliques dispersées.Ce procédé ne produit pas les nanoparticules d'or de façon spontanée et de plus il nécessite des étapes d'échauffement.

Les méthodes de fabrication de nanoparticules métalliques avec un contrôle précis de leurs propriétés physiques et optiques ne répondent pas toujours aux critères souhaités. Les méthodes de synthèse par vole chimiques sont nombreuses mais ce contrôle nécessite la réalisation d'un certain nombre d'étapes pour aboutir aux structures désirées comme décrit ci-dessus. Quant aux méthodes physiques, comme la lithographie ionique et électronique, le procédé reste long et coûteux et la diminution de la taille des objets fabriqués reste un facteur limitant.

Dans ce contexte, la fabrication des nano-objets métalliques par une méthode simple et à faible coût est nécessaire. La présente invention porte sur un développement de nouvelles méthodes de synthèse de matériaux métalliques qui présenterait un concept intéressant par sa relative simplicité et son faible coût de réalisation comparé aux méthodes chimiques et physiques existantes.

### EXPOSE DE L'INVENTION

L'invention vise à remédier aux inconvénients de l'état de la technique et notamment à proposer un procédé de fabrication de nano-objets métalliques de telle sorte que les nano-objets métalliques sont crées en temps réel au cours de dépôt et étalement d'une solution de précurseur métallique sur une surface d'un substrat conducteur ou semi conducteur et sont donc naturellement dispersés et fixés sur la surface du substrat formant ainsi des nanostructures métalliques exemptes de stabilisants et de réducteurs ou tout autre ligand.

Pour ce faire est proposé un procédé qui comprend les étapes suivantes :
- formation d'une première solution d'un sel de métal à une concentration inférieure à 2,6% dans de l'éthanol (m/v),
- obtention d'une solution de polymère par dissolution d'un polymère dans un solvant,
- création d'une solution précurseur métallique/polymère par mélange de ladite première solution avec ladite solution de polymère, (avantageusement par mélange d'environ 50 % de ladite première solution avec environ 50% de ladite solution de polymère (v/v)),
- transformation de ladite solution précurseur métallique/polymère en un film poreux, par élimination dudit solvant, et simultanément réduction du sel de métal, par dépôt et étalement de ladite solution précurseur métallique/polymère sur ladite surface dudit substrat de façon à ce que les nano-objets métalliques se placent dans les pores du film en surface du substrat, lesdits nano-objets présentant une taille de 20 nanomètres à quelques micromètres.

Selon un mode préféré de réalisation de l'invention, la concentration du sel de métal dans le l'éthanol est de préférence d'environ 1% (m/v).

Selon un mode préféré de réalisation de l'invention, le polymère est du polyméthacrylate de méthyle dit PMMA.

Selon l'invention, le sel de métal comprend un métal sélectionné dans le groupe comprenant de l'or, de l'argent, du cuivre ou du platine.

En outre, selon l'invention, le solvant de la solution de polymère peut être de l'acétone.

Selon un mode de réalisation de l'invention, le solvant de la solution de polymère est le toluène ou du Méthylisobutylcétone.

Selon un mode de réalisation de l'invention, le substrat est un silicium semi-conducteur.

Conformément à une autre possibilité, le substrat est un matériau conducteur ITO (Indium Tin Oxyde).

L'invention concerne en outre une nanostructure métallique comprenant un substrat conducteur ou semi conducteur et des nano-objets métalliques fixés sur une surface dudit substrat conducteur ou semi-conducteur et obtenus par le procédé décrit ci-dessus. Les nano-objets ainsi fixés présentent une forme et une répartition dont l'homogénéité et la régularité sont surprenantes par rapport à ceux des nanostructures de l'état de l'art. Leur taille varie de 20 nm à quelques micromètres.

Avantageusement, la nanostructure métallique selon l'invention se caractérise par le fait que lesdits nano-objets métalliques sont de natures et/ou tailles et/ou formes différentes. En particulier lesdits nano-objets métalliques sont de natures et/ou tailles et/ou formes différentes selon la nature du substrat conducteur ou semi-conducteur et en fonction du sel de métal utilisé dans ledit procédé

Avantageusement, lesdits nano-objets métalliques sont obtenus en utilisant un sel de métal d'argent ou un sel de métal d'or et présentent des tailles allant de 20 nanomètres à quelques micromètres.

Selon l'invention, lesdits nano-objets métalliques, en particulier des nano-objets métalliques d'argent, se présentent en formes de bagues sur Silicium ou en formes de pétales sur ITO.

Selon un mode réalisation de l'invention, lesdits nano-objets métalliques, en particulier des nano-objets métalliques d'or, se présentent en formes d'hexagones sur Silicium et ITO.

L'invention concerne en outre, l'utilisation de nanostructures métalliques décrites ci-dessus, en tant que capteurs bio/chimiques basés sur la spectroscopie de diffusion Raman exaltée de surface (acronyme SERS en anglais) et les plasmons de surface localisés.

L'invention concerne également un capteur bio/chimique basé sur la spectroscopie de diffusion Raman exaltée de surface (SERS) et les plasmons de surface localisés caractérisé en ce qu'il comprend une nanostructure métallique décrite ci-dessus.

### BREVE DESCRIPTION DES FIGURES

D'autres caractéristiques, détails et avantages de l'invention ressortiront à la lecture de la description qui suit, en référence aux figures annexées, qui illustrent:
- Les figures 1A et 1B illustrent l'image topographique d'un film de PMMA dopé par l'argent (A) et l'or (B) sur un substrat obtenue par Microscopie à Force Atomique (AFM);
- la figure 2 illustre l'image topographique de nano-objets métalliques d'argent obtenue par Microscopie à Force Atomique (AFM);
- la figure 3 est l'image de nano-objets métallique d'argent obtenue par Microscopie électronique à balayage (MEB);
- les figures 4A et 4B sont les images de nano-objets métalliques d'argent (A) et d'or (B) formées sans aucun traitement du film de PMMA, obtenue par Microscopie électronique à balayage;
- Les figures 5A et 5B illustrent l'image de nano-objets métallique d'argent (A) et d'or (B) montrant la possibilité de jouer sur la forme des nano-objets, par Microscopie électronique à balayage;
- La figure 6 est l'image de nano-objets métallique d'argents formés sans aucun traitement du film de PMMA, obtenue par Microscopie électronique à balayage, montrant de gauche à droite, la diminution de la taille des nano-objets ;
- la figure 7 montre un Spectre SERS et Raman de la Bipyridine (PBE) obtenu sur des nanoparticules d'argents et d'or ;

Depuis plusieurs années un intérêt croissant, expérimental comme théorique, est porté à l'étude de particules métalliques de taille nanométriques, qu'on appellera indifféremment nanoparticules ou nano-objets métalliques. En particulier, en raison du confinement des électrons, ces nanoparticules ont des propriétés optiques, électroniques, magnétiques....différentes de celles du solide massif. Les propriétés particulières des nanoparticules métalliques sont attribuées au phénomène de résonance plasmon. Dans les nanoparticules métalliques, ce terme désigne classiquement l'oscillation collective des électrons de conduction de la particule en réponse à une onde électromagnétique. Dans le cas des métaux nobles, elle se situe dans le visible ou le proche ultra-violet.

Le phénomène de résonance plasmon se manifeste dans la réponse optique par une bande d'absorption dont la largeur et la position spectrale dépendent en particulier de l'environnement et de la taille des nanoparticules. Pour les nanoparticules de métaux nobles l'énergie de résonance plasmon de surface augmente quand leur taille diminue. Ceci est dû à l'influence déterminante des électrons de coeur des métaux nobles sur l'oscillation collective des électrons.

La synthèse des nanoparticules métalliques peut se faire de diverses façons aussi bien par voie chimique que par des méthodes physiques. Les méthodes de synthèse par voie chimique sont nombreuses, ces synthèses se font en solution (milieu aqueux, polyol,...) par des méthodes classiques de réduction de sels métalliques. Par exemple, la synthèse par voie chimique de nanoparticules d'or permet d'obtenir des nanoparticules d'or en suspension. Le principe est une réduction de sels métalliques par un réducteur et des ligands stabilisateurs.

Dans les méthodes physiques comme la lithographie ionique ou électronique, la méthode de fabrication des nanoparticules métalliques est longue et coûteuse. De plus la diminution de la taille des objets fabriqués par cette méthode, reste un facteur limitant.

Le procédé de fabrication de la présente invention consiste à fabriquer, en une seule étape, de nano-objets métalliques exempts de ligands de stabilisation directement à la surface d'un substrat. En particulier, il s'agit de déposer une solution de précurseur métallique et du polymère sur un substrat, afin d'obtenir simultanément, un film poreux de polymère de tel sorte qu'à l'intérieur de ses pores soient localisés des nano-objets métalliques.

Récemment, certains polymères nanoporeux et notamment à base de PMMA ont connu un intérêt croissant en raison de leur compatibilité et affinité vis-à-vis de certaines biomolécules (bactéries par exemple). En particulier, ces films poreux ont été proposés comme membranes de séparation de phase. Ainsi dans la présente invention, la présence d'un matériau hybride bifonctionnel-micro/nanodomaines de nano-objets métalliques entourés par du PMMA - pourra être mise à profit comme membrane de séparation et de détection sélective.

Dans la présente invention on fabrique des films poreux par dépôt d'une dispersion de polymère contenant un sel métallique sur un substrat. En particulier par dépôt d'une dispersion de PMMA (polyméthacrylate de méthyle), contenant un sel d'argent ou d'or sur un substrat conducteur ou semi conducteur. Pour préparer la dispersion de PMMA, un sel métallique, particulièrement sel d'argent ou sel d'or à une concentration inférieure à 2,6% est dissous dans de l'éthanol afin d'obtenir une première solution. La concentration inférieure à 2,6 % du sel de métal dans de l'éthanol correspond à la limite de solubilité du sel utilisé. Dans la présente invention la concentration du sel de métal dans de l'éthanol est de préférence 1%. Ensuite, environ 50% de cette première solution obtenue est mélangée avec environ 50% d'une solution de PMMA. Une solution de PMMA est obtenue par une dissolution dudit PMMA dans de l'acétone à une concentration d'environ 15g/l. En effet, on peut utiliser d'autres solvants organiques qui solubilisent bien le PMMA comme le toluène ou le Méthylisobutylcétone (souvent noté MIBK). Le mélange du sel de métal et de la solution de PMMA permet d'obtenir une solution précurseur métallique/polymère. La solution précurseur métallique/polymère obtenue ainsi sera transformée en un film poreux de PMMA lors du dépôt de ladite solution précurseur métallique/polymère et après élimination du solvant. Simultanément, le sel de métal sera réduit sans ajout de stabilisant ni de réducteur, sur la surface d'un substrat conducteur ou semi-conducteur de telle sorte que les nano-objets métalliques se placent en surface dudit substrat, dans les pores du film de PMMA. Le sel métallique dans le procédé joue le rôle de séparateur de phase et sera par conséquence, naturellement présent dans la phase des pores avant d'être transformé sans aucune étape de traitement en nano-objets métalliques. A noter que l'élimination du solvant est effectuée par évaporation lors de l'étalement de la solution déposée par spin-coating (méthode de la tournette) ou par dip-coating (trempage en solution). Les nano-objets métalliques sont directement formés sur le substrat sans utilisation d'un stabilisant comme c'est le cas par synthèse chimique où la fabrication se fait en plusieurs étapes, d'abord en solution ensuite les nanoparticules ainsi obtenues sont transférées sur un substrat ce qui nécessite parfois la fonctionnalisation du substrat pour maintenir la stabilité et assurer une bonne dispersion des nanoparticules.

Le substrat sur lequel les nano-objets métalliques ainsi obtenus sont fixés est un substrat conducteur ou bien semi-conducteur. Particulièrement, le substrat conducteur peut être un verre couvert par une couche conductrice d'ITO qui est un oxyde conducteur. Le silicium a été utilisé en tant que substrat semi-conducteur.

Tout sel de métal comme Ag, Au, Cu, Zn, Pd, Al,... peut être prévu, en particulier, il a été testé un sel d'argent ou un sel d'or afin de démontrer leurs propriétés optiques.

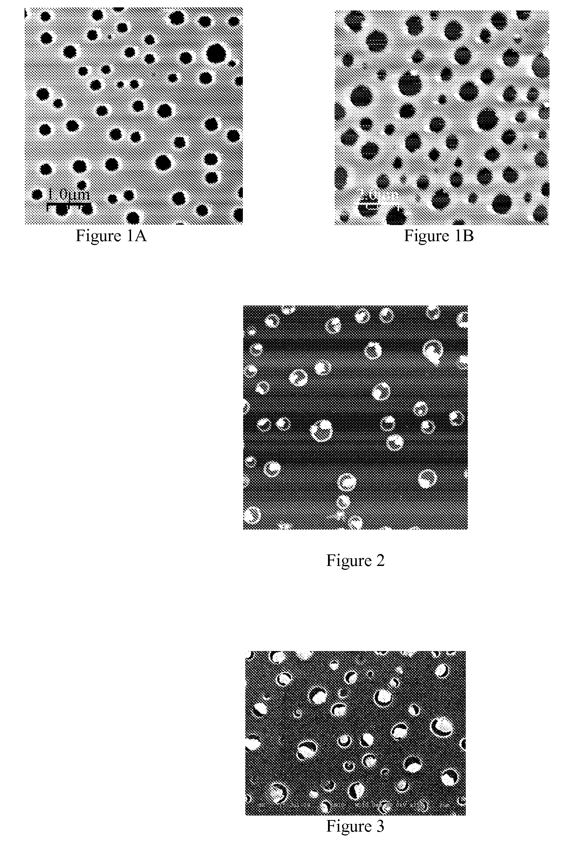

Les figures 1A et 1B illustrent l'image topographique d'un film de PMMA dopé par l'argent (A) et l'or (B) sur un substrat de verre couvert d'une couche conductrice ITO. Les images sont obtenues par Microscopie à Force Atomique (AFM). Le microscope à force atomique (ou AFM pour *atomic force microscope*) est un type de microscope à sonde locale qui sert à visualiser la topographie de la surface d'un échantillon. Le principe se base sur les interactions entre l'échantillon et une pointe montée sur un microlevier. La pointe balaie (scanne) la surface à analyser, et l'on agit sur sa hauteur selon un paramètre de rétroaction. Un ordinateur enregistre cette hauteur et peut ainsi reconstituer une image de la surface de l'échantillon.

La figure 2 illustre l'image topographique de nano-objets métalliques d'argent obtenue par Microscopie à Force Atomique (AFM) et la figure 3 illustre l'image obtenue de nano-objes métalliques d'argent par Microscopie électronique à balayage. La microscopie électronique à balayage (MEB) est une technique de microscopie électronique basée sur le principe des interactions électrons-matières, capable de produire des images en haute résolution de la surface d'un échantillon.

L'invention concerne encore une nanostructure métallique comprenant un substrat conducteur comme ITO ou Silicium et des nano-objets métalliques fixés en surface du substrat. En effet, les nano-objets métalliques obtenus par le procédé de l'invention sont fixés à la surface du substrat et selon la nature du sel métallique utilisé dans le procédé ou bien la taille des pores du film de PMMA, la nature et la taille des nano-objets métalliques sont différents. La forme des nano-objets métalliques est modifiée selon la physico-chimie de la solution de PMMA ainsi que la nature du substrat

En effet, le diamètre des nano-objets métalliques est directement lié à la taille des pores, qui dépend de la vitesse d'évaporation du solvant. Le diamètre des pores est de plus en plus petit lorsque le solvant s'évapore plus vite. Ainsi, en modifiant la vitesse d'évaporation des solvants au moment de l'étalement de la solution sur le substrat conducteur, nous pouvons modifier la taille des nano-objets. Ainsi la taille des nano-objets peut être modifiée, en allant d'un dip-coating (évaporation lente) à un spin-coating (évaporation plus rapide et modulable via le réglage de vitesse de rotation).

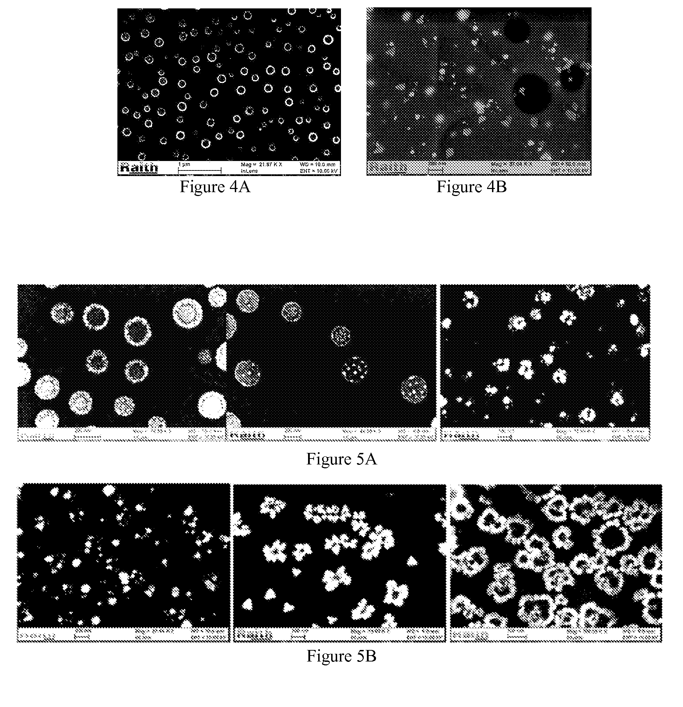

La nature des nano-objets sera modifiée en changeant le sel de métal utilisé dans le procédé de l'invention. Par exemple en remplaçant l'or par l'argent ou le platine. Les figures 4A et 4B sont des images obtenues par Microscopie à balayage de nano-objets d'argent (A) et d'or (B) formées sans aucun traitement du film de PMMA. En jouant sur le rapport molaire des solvants, la concentration du sel métallique, la nature du métal et le substrat il est possible de modifier la nature et la forme des nano-objets.

Les figures 5A et 5B sont des images obtenues par microscopie à balayage de nano-objets d'argent (5A) et d'or (5B) montrant la possibilité de jouer sur la forme de nano-objets. Ainsi, nous constatons que les nano-objets d'argent sur du Silicium sont en forme de bague, alors que sur un substrat de verre recouvert d'une couche conductrice d'ITO, ils sont en forme de pétales de corn flackes. De même les nano-objets d'or sur du Silicum et d'ITO sont en forme d'hexagone (5B).

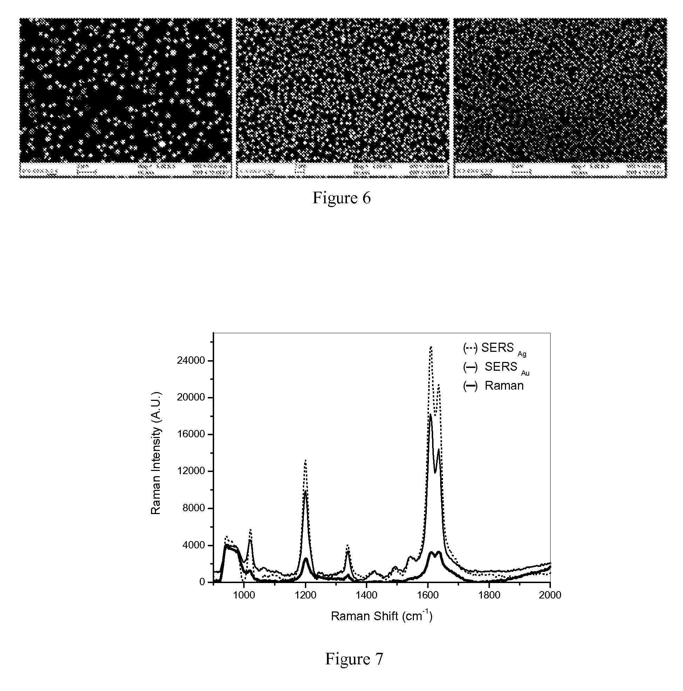

De plus, il est possible selon l'invention de contrôler la taille des nano-objets en jouant sur la vitesse d'évaporation des solvants. La figure 6 est une image obtenue par microscopie à balayage de nano-objets d'argent sans aucun traitement du film de PMMA (image gauche). Ainsi en jouant sur la vitesse d'évaporation des solvants, la taille de nano-objets est diminuée (image du milieu et de droite). Cela montre que le diamètre des nano-objets est directement lié à la taille des pores qui dépend entre autres de la vitesse d'évaporation des solvants. La présente invention permet ainsi de fabriquer des nano-objets de taille allant de 20nm jusqu'à quelques microns.

L'invention concerne encore l'utilisation des nanostructures métalliques telles que décrits ci-dessus, en tant que capteurs bio/chimiques basés sur la SERS et les plasmons de surface localisés (LSPR).

Le phénomène SERS peut s'expliquer par une exaltation du champ électrique local s'exerçant sur les molécules et atomes. L'origine de cette exaltation est due à un couplage de la lumière avec les ondes de densité électronique qui se manifestent près de la surface dans certains métaux ayant de préférence des dimensions nanométriques. Les ondes de densité électronique sont dues aux électrons libres du métal. Les "nouvelles particules" formées par ce couplage sont appelées "plasmons de surface". La fréquence de résonance des plasmons de surface de certains métaux (or, argent, cuivre...) est située dans le domaine du visible et ceux-ci peuvent être couplés et se révéler de manière optique et ainsi amplifier le champ électrique local.

Pour montrer les propriétés optiques, les échantillons d'argent (Ag) et d'or (Au) ont été testées par la SERS (Diffusion Raman exaltée de surface). En effet, la diffusion Raman exaltée en surface (Surface-enhanced Raman scattering (SERS) est une technique spectroscopique qui combine l'usage de la microsonde Raman avec l'analyse de composés déposés sur des nano-objets métalliques. Le signal Raman des molécules est très fortement exalté lorsque celles-ci sont liées à des structures nanométriques d'or ou d'argent.

La figure 7 montres les spectres SERS et Raman de la Bipyridine (BPE) à une concentration de 10⁻⁵ M, obtenus sur des nano-objets métalliques d'argent et d'or, selon l'invention. Les spectres montrent un bon facteur d'exaltation des nano-objets métalliques d'or ou d'argent par rapport au Raman classique. Un facteur d'exaltation d'environ 10¹⁰ a été relevé pour 10⁻⁵ M. Il est possible d'aller au-delà de cette concentration plus particulièrement jusqu'à 10⁻¹² M ce qui reflète la haute sensibilité de telles structures métalliques à détecter de très faibles concentrations, tel que décrits dans la présente invention. Ceci met en évidence la haute sensibilité de nanostructures métalliques en tant que capteurs plasmoniques pour des applications diverses comme le diagnostic maladie, l'étude de cellule en biologie....

De nombreuses utilisations de nano-objets métalliques obtenus à partir différents sels de métal (Zn, Au, Ag, Cu, Pd, ..) peuvent être envisagées sans sortir du cadre de l'invention; l'homme du métier choisira l'une ou l'autre en fonction des contraintes économiques ou autres qu'il devra respecter.

## Revendications

1. Procédé de fabrication de nano-objets métalliques fixés sur une surface d'un substrat conducteur ou semi conducteur **caractérisé par le fait qu'**il comprend les étapes suivantes :
formation d'une première solution d'un sel de métal à une concentration inférieure à 2,6% dans de l'éthanol,
obtention d'une solution de polymère par dissolution d'un polymère dans un solvant,
création d'une solution précurseur métallique/polymère par mélange d'environ 50 % de ladite première solution avec environ 50% de ladite solution de polymère,
transformation de ladite solution précurseur métallique/polymère en un film poreux, par élimination dudit solvant, et simultanément réduction du sel de métal, par dépôt et étalement de ladite solution précurseur métallique/polymère sur ladite surface dudit substrat de façon à ce que les nano-objets métalliques se placent dans les pores du film en surface du substrat, lesdits nano-objets présentant une taille de 20 nanomètres à quelques micromètres.

2. Procédé de fabrication de nano-objets métalliques selon la revendication 1, dans lequel la concentration du sel de métal dans de l'éthanol est de d'environ 1% (m/v).

3. Procédé de fabrication de nano-objets métalliques selon la revendication 1 ou 2, dans lequel le polymère est du polyméthacrylate de méthyle dit PMMA.

4. Procédé de fabrication de nano-objets métalliques selon l'une des revendications 1 à 3, dans lequel le sel de métal comprend un métal sélectionné dans le groupe comprenant de l'or, de l'argent, du cuivre ou du platine.

5. Procédé de fabrication de nano-objets métalliques selon l'une des revendications 1 à 4, pour lequel le solvant de la solution de polymère est l'acétone.

6. Procédé de fabrication de nano-objets métalliques selon l'une des revendications 1 à 4, pour lequel le solvant de la solution de polymère est le toluène ou du Méthyllsobutylcétone.

7. Procédé de fabrication de nano-objets métalliques selon l'une des revendications 1 à 6, dont le substrat est un silicium semi-conducteur.

8. Procédé de fabrication de nano-objets métalliques selon l'une des revendications 1 à 6, dont le substrat est un matériau conducteur ITO.

9. Nanostructure métallique comprenant un substrat conducteur ou semi-conducteur et des nano-objets métalliques d'une taille allant de 20 nanomètres à quelques micromètres, lesdits nano-objets étant fixés sur une surface dudit substrat conducteur ou semi-conducteur et obtenus par le procédé d'une des revendications 1 à 8.

10. Nanostructure métallique selon la revendication 9, **caractérisé par le fait que** lesdits nano-objets métalliques sont de natures et/ou tailles et/ou formes différents selon la nature du substrat conducteur ou semi-conducteur et en fonction du sel de métal utilisé dans ledit procédé.

11. Nanostructure métallique selon la revendication 9 ou 10 dans lequel, lesdits nano-objets métalliques sont obtenus en utilisant un sel de métal d'argent ou un sel de métal d'or et présentent des tailles allant de 20 nanomètres à quelques micromètres.

12. Nanostructure métallique selon l'une des revendications 9 à 11 dans lequel, lesdits nano-objets métalliques d'argent se présentent en formes de bagues sur Silicium et/ou en formes de pétales sur ITO.

13. Nanostructure métallique selon l'une des revendications 9 à 11 dans lequel, lesdits nano-objets métalliques d'or se présentent en formes d'hexagones sur Silicium et ITO.

14. Utilisation d'une nanostructure métallique selon l'une quelconque des revendications 9 à 13 en tant que capteurs bio/chimiques basés sur la spectroscopie de diffusion Raman exaltée de surface (SERS) et les plasmons de surface localisés.

15. Capteur bio/chimique basé sur la spectroscopie de diffusion Raman exalté de surface (SERS) et les plasmons de surface localisés **caractérisé en ce qu'**il comprend une nanostructure métallique selon l'une des revendications 9 à 13.

## Patentansprüche

1. Verfahren zur Herstellung von metallischen Nanoobjekten, die auf der Oberfläche eines Leiter- oder Halbleitersubstrats befestigt werden, **dadurch gekennzeichnet, dass** es folgende Schritte umfasst:
die Bildung einer ersten Lösung mit einem Metallsalz in einer Konzentration in Ethanol kleiner 2,6%,
das Erhalten einer Polymerlösung durch Auflösen eines Polymers in einem Lösungsmittel,
die Zusammenstellung einer Metall/Polymer-Vorläuferlösung durch Mischung von ungefähr 50% der besagten ersten Lösung mit ungefähr 50% der besagten Polymerlösung,
die Umwandlung besagter Metall/Polymer-Vorläuferlösung in einen porösen Film durch Beseitigung besagten Lösungsmittels, und gleichzeitig die Reduktion des Metallsalzes durch Auftrag und Verteilung besagter Metall/Polymer-Vorläuferlösung auf besagter Oberfläche des besagten Substrats, so dass sich die metallischen Nanoobjekte in die Poren des Films an der Oberfläche des Substrats setzen, wobei besagte Nanoobjekte eine Größe zwischen 20 Nanometern und einigen Mikrometern haben.

2. Herstellungsverfahren für metallische Nanoobjekte nach Patentanspruch 1, bei dem die Konzentration des Metallsalzes in Ethanol ungefähr 1% (m/v) beträgt.

3. Herstellungsverfahren für metallische Nanoobjekte nach Patentanspruch 1 oder 2, in dem das Polymer aus Polymethylmethacrylat, genannt PMMA, besteht.

4. Herstellungsverfahren für metallische Nanoobjekte nach einem der Patentansprüche 1 bis 3, in dem das Metallsalz ein Metall aus einer Gruppe bestehend aus Gold, Silber, Kupfer oder Platin ausgewählt wird.

5. Herstellungsverfahren für metallische Nanoobjekte nach einem der Patentansprüche 1 bis 4, bei dem das Lösungsmittel der Polymerlösung Aceton ist.

6. Herstellungsverfahren für metallische Nanoobjekte nach einem der Patentansprüche 1 bis 4, bei dem das Lösungsmittel der Polymerlösung Toluen oder Methylisobutyketon ist.

7. Herstellungsverfahren nach einem der Patentansprüche 1 bis 6, dessen Substrat Halbleitersilicium ist.

8. Herstellungsverfahren nach einem der Patentansprüche 1 bis 6, dessen Substrat ein leitfähiges ITO-Material ist.

9. Metallische Nanostruktur, welche ein Leiter-oder Halbleitersubstrat und metallische Nanoobjekte in einer Größe zwischen 20 Nanometern und einigen Mikrometern umfasst, wobei besagte Nanoobjekte auf einer Oberfläche besagten Leiter- oder Haltleitersubstrats befestigt und durch das Verfahren nach einem der Patentansprüche 1 bis 8 erhalten werden.

10. Metallische Nanostruktur nach Patentanspruch 9, **dadurch gekennzeichnet, dass** die Beschaffenheit und/oder Größe und/oder Form der besagten metallischen Nanoobjekte je nach Beschaffenheit des Leiter- oder Halbleitersubtrats und in Abhängigkeit von dem in besagtem Verfahren benutzten Metallsalz unterschiedlich sind.

11. Metallische Nanostruktur nach Patentanspruch 9 und 10, in dem besagte metallische Nanoobjekte durch Benutzung eines Silber- oder eines Goldmetallsalzes erzielt werden und Größen zwischen 20 Nanometern und einigen Mikrometern aufweisen.

12. Metallische Nanostruktur nach einem der Patentansprüche 9 bis 11, in dem besagte metallische Nanoobjekt aus Silber ringförmig auf Silicium und/oder blütenförmig auf ITO angeordnet ist.

13. Metallische Nanostruktur nach einem der Patentansprüche 9 bis 11, in dem besagte metallische Nanoobjekte aus Gold auf Silicium und ITO eine sechseckige Form aufweisen.

14. Benutzung einer metallischen Nanostruktur nach einem der Patentansprüche 9 bis 13 als biochemische Sensoren, die auf der Spektroskopie der oberflächenverstärkten Raman-Streuung (SERS) und den lokalisierten Oberflächenplasmonen basiert.

15. Biochemischer Sensor basierend auf der Spektroskopie der oberflächenverstärkten Raman-Streuung (SERS) und lokalisierten Oberflächenplasmonen, **dadurch gekennzeichnet, dass** er eine metallische Nanostruktur nach einem der Patentansprüche 9 bis 13 aufweist.

## Claims

1. A method for manufacturing metal nano-objects attached to a surface of a conductive or semi-conductive substrate, **characterized in that** it comprises the following steps:
producing a first solution of a metal salt with a concentration of less than 2.6% in ethanol;
obtaining a polymer solution by dissolving a polymer in a solvent;
making a metal/polymer precursor solution by mixing approximately 50% of said first solution with approximately 50% of said polymer solution;
converting said metal/polymer precursor solution into a porous film, by removing said solvent, while simultaneously reducing the metal salt, by depositing and spreading said metal/polymer precursor solution over said surface of said substrate, so that the metal nano-objects are placed in the pores of the film at the surface of the substrate, with said nano-objects having a size ranging from 20 nanometers to a few micrometers.

2. A method for manufacturing metal nano-objects according to claim 1, wherein the concentration of metal salt in ethanol is about 1% (w/v).

3. A method for manufacturing metal nano-objects according to claim 1 or 2, wherein the polymer is polymethyl methacrylate, also called PMMA.

4. A method for manufacturing metal nano-objects according to one of claims 1 to 3, wherein the metal salt comprises a metal selected from the group comprising gold, silver, copper or platinum.

5. A method for manufacturing metal nano-objects according to one of claims 1 to 4, wherein the solvent in the polymer solution is acetone.

6. A method for manufacturing metal nano-objects according to one of claims 1 to 4, wherein the solvent in the polymer solution is toluene or methylisobutylketone.

7. A method for manufacturing metal nano-objects according to one of claims 1 to 6, wherein the substrate is semi-conductive silicon.

8. A method for manufacturing metal nano-objects according to one of claims 1 to 6, wherein the substrate is a conductive ITO material.

9. A metal nanostructure comprising a conductive or semi-conductive substrate and metal nano-objects having a size ranging from 20 nanometers to a few micrometers, with said nano-objects being attached to a surface of said conductive or semi-conductive substrate and obtained using the method according to one of claims 1 to 8.

10. A metal nanostructure according to claim 9, **characterized in that** said metal nano-objects are of different kinds and/or sizes and/or shapes depending on the nature of the conductive or semi-conductive substrate and depending on the metal salt used in said method.

11. A metal nanostructure according to claim 9 or 10, wherein said metal nano-objects are obtained using a silver metal salt or a gold metal salt and have a size ranging from 20 nanometers to a few micrometers.

12. A metal nanostructure according to one of claims 9 to 11, wherein said silver metal nano-objects are ring-shaped on silicon and/or petal-shaped on ITO.

13. A metal nanostructure according to one of claims 9 to 11, wherein said metal gold nano-objects are hexagon-shaped on silicon and ITO.

14. Use of a metal nanostructure according to any one of claims 9 to 13 as bio/chemical sensors based on surface enhanced Raman scattering (SERS) spectroscopy and localized surface plasmons.

15. A bio/chemical sensor based on surface enhanced Raman scattering (SERS) spectroscopy and localized surface plasmons, **characterized in that** it comprises a metal nanostructure according to one of claims 9 to 13.
